(19) **Europäisches Patentamt**
**European Patent Office**
**Office européen des brevets**

(11) **EP 2 216 986 A1**

(12) **EUROPEAN PATENT APPLICATION**

(43) Date of publication:
**11.08.2010 Bulletin 2010/32**

(51) Int Cl.:
*H04N 5/232* (2006.01)   *H04N 5/225* (2006.01)
*G03B 7/20* (2006.01)   *G03B 17/14* (2006.01)

(21) Application number: **09180295.9**

(22) Date of filing: **22.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.02.2009 JP 2009028823**

(71) Applicant: **Fujinon Corporation**
**Saitama-shi,**
**Saitama (JP)**

(72) Inventors:
• **Moriya, Chikatsu**
 **Saitama (JP)**
• **Mizumura, Hiroshi**
 **Saitama (JP)**

(74) Representative: **Klunker . Schmitt-Nilson . Hirsch**
**Patentanwälte**
**Destouchesstrasse 68**
**80796 München (DE)**

(54) **Lens device**

(57)    A CPU 20 of a lens device 10 controls an iris 22 based on iris control commands which are supplied from a CPU 40 of a camera body 12 by serial communication. In doing this, the CPU 20 changes a proportional gain for proportionally controlling the iris according to the communication interval between the control commands, to an appropriate value so that the controlled object operates smoothly.

FIG. 1

**Description**

BACKGROUND OF THE INVENTION

1. Technical Field

The invention relates to a lens device, and more particularly, to a lens device that exchanges various signals such as control commands with an external device such as a camera body.

2. Description of the Related Art

A lens device detachably attached to a camera body of a television camera is connected to the camera body by an electric connector to exchange various signals with the camera body. Some camera bodies have a serial communication function of transmitting and receiving plural pieces of information on one line as digital serial signals (see Japanese Patent No.2756339 (corresponding to U.S. Patent Nos.5,161,026; 5,485,208; and 6,608,651)), and other camera bodies have a parallel communication function of transmitting and receiving plural pieces of information on a type basis on plural lines as a L level and a H level or as analog signals (which will be referred to as "parallel signals"). A generally known lens device is one that has both the serial communication function and the parallel communication function so as to be adaptable to camera bodies of the both types.

As the camera body having the serial communication function, the following ones are known. That is, one transmits and receives all the data by serial communication, and another one further has the parallel communication function, transmits and receives only part of data by serial communication and transmits and receives the remaining data by parallel communication.

Another known lens device is one to which (i) a lens accessory device for remotely controlling zooming, focusing or the like (a zoom demand or a focus demand controller) and/or (ii) a personal computer (PC) is connected by a cable or the like and which transmits and receives various pieces of data with those devices as in the camera body.

However, in the lens devices as described above, when a control command (command signal) is received from an external device such as a camera body, a lens accessory device or a PC, a controlled object such as an iris, zooming or focusing is normally controlled by motor driving according to the control command. At this time, in the case where data of the control command is transmitted by serial communication, although an interval of communication between the lens device and the external device is defmed by a protocol of the serial communication, the communication interval between the control commands for each controlled object is not prescribed. For example, the communication interval between the control commands when a position of the iris is controlled by the control commands from the camera body takes different values such as 2 msec or 48 msec depending on types of camera bodies.

Also, in some lens devices, every time a control command is supplied from an external device, a controlled object is controlled according to the control command irrespective of a communication interval between control commands. For this reason, since the communication interval between the control commands differs depending on the type of the external device, while a controlled object moves smoothly with respect to an external device of one type, the controlled object moves intermittently (moves unsmoothly) or moves with poor followability (moves sluggishly) with respect to an external device of another type.

SUMMARY OF THE INVENTION

The invention has been made in view of such circumstances and provides a lens device capable of causing a predetermined controlled object to operate smoothly irrespective of a communication interval between control commands for the predetermined controlled object when data of the control commands are transmitted between the lens device and an external device by serial communication.

[1] According to an aspect of the invention, a lens device includes an optical system, a communication interval detecting unit, and a control parameter changing unit. The optical system forms a subject image. The lens device is supplied with control commands related to control of a predetermined controlled object of the optical system from an external device by serial communication and controls the controlled object according to the control command. The communication interval detecting unit detects a communication interval between the control commands. The control parameter changing unit changes a value of a predetermined control parameter related to the controlled object according to the communication interval detected by the communication interval detecting unit.

[2] In the lens device of [1], the control parameter changed by the control parameter changing unit may be a proportional gain for proportionally controlling the controlled object.

[3] In the lens device of [1], data indicating a value of the control parameter which is optimum for the communication interval between the control commands may be stored in a memory in advance. The control parameter changing unit may change the value of the control parameter based on the data stored in the memory.

[4] In the lens device of any one of [1] to [3], the controlled object may be an iris, zooming or focusing.

[5] In the lens device of any one of [1] to [4], the external device may be a camera body, a personal computer or a lens accessory.

With the above configuration, when data of the control commands for the predetermined controlled object are transmitted between the lens device and the external device by serial communication, the controlled object can operate smoothly irrespective of the communication interval between the control commands.

BRIEF DESCRIPTION OF THE DRAWINGS

Fig. 1 is a block diagram showing a state where a lens device according to an embodiment of the invention is mechanically attached and electrically connected to a camera body of a predetermined type;

Fig. 2 is a view showing a relationship between a communication interval between iris control commands and position change of an iris controlled by a drive voltage, with respect to different proportional gains;

Fig. 3 is a flowchart showing a processing procedure of iris control performed by a CPU of the lens device;

Fig. 4 is a circuit diagram illustrating a circuit that provides the proportional gain of proportional control;

Fig. 5 is an explanatory view used for explaining a mode of changing a control interval according to the communication interval between the control commands;

Fig. 6 is a flowchart showing a processing procedure performed by the CPU of the lens device in the case where the lens device is connectable to a camera body, a PC and a lens accessory and that a position of a predetermined controlled object is controlled based on control commands supplied from any of the external devices; and

Fig. 7 is a flowchart showing details of the processing at step S24 of Fig. 6.

DETAILED DESCRIPTION OF EMBODIMENTS OF THE INVENTION

Hereinafter, a lens device according to embodiments of the invention will be described in detail with reference to the accompanying drawings.

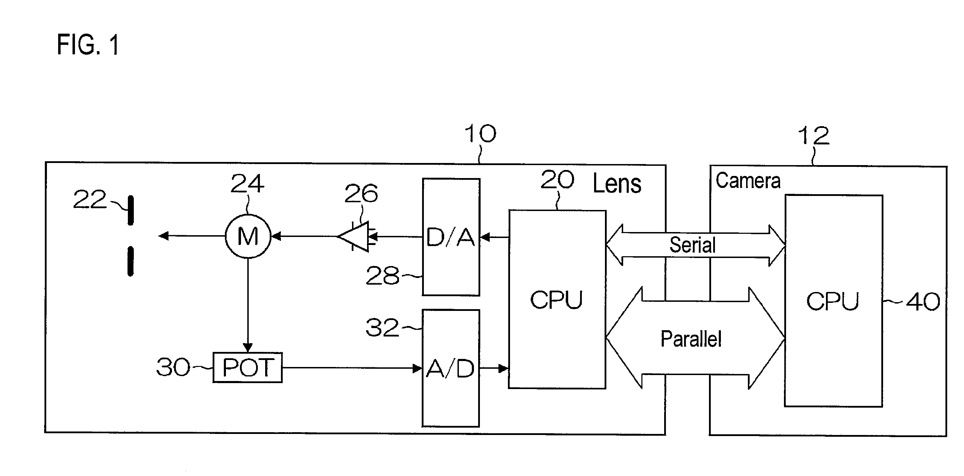

Fig. 1 is a block diagram showing a state where a lens device according to an embodiment of the invention is mechanically attached and electrically connected to a camera body of a predetermined type. In the figure, a lens device 10 and a camera body 12 are provided with a CPU 20 and a CPU 40, respectively. Various types of data can be exchanged between the CPUs 20 and 40 by either of serial communication and parallel communication. However, it is not always necessary that data transmission by parallel communication can be performed.

The lens device 10 is provided with an optical system for forming a subject image on an imaging device of the camera body 12 and a control system for controlling an iris of the optical system, zooming (a zoom lens) and focusing (a focus lens) by electromotive power (e.g., a motor). The figure shows the configuration in which the iris 22 and the control system are only provided. As shown in the figure, the iris 22 is opened and closed by a motor 24, and the motor 24 is connected to the CPU 20 through an amplifier 26 and a D/A converter 28.

The CPU 20 outputs a drive signal of a digital value indicative of a drive voltage to be applied to the motor 24. The drive signal is converted by the D/A converter 28 into a drive signal of an analog voltage, and input to the amplifier 26. Then, a drive voltage corresponding to the voltage value of the drive signal is applied from the amplifier 26 to the motor 24. Thereby, the CPU 20 can control a rotation speed of the motor 24, that is, an operation speed of the iris 22 by adjusting the drive voltage applied to the motor 24.

A potentiometer 30 for detecting a current position (opening-and-closing position) of the iris 22 is coupled to the motor 24. The output signal (position signal) thereof is converted into a digital signal by an A/D converter 32, and is read by the CPU 20.

Thus, the CPU 20 can perform position control (feedback control) of the iris 22 so that the iris 22 is located in a desired position by adjusting the drive voltage applied to the motor 24 to control the operation speed of the iris 22 while detecting the current position of the iris 22 based on a position signal from the potentiometer 30.

Also, an iris control command indicative of a position where the iris 22 is to be set (target position) is supplied to the CPU 20 of the lens device 10 by serial communication. The CPU 20 sets the target position of the iris 22 based on the iris control command. Then, the CPU 20 controls the position of the iris 22 so that the iris 22 is located in the target position.

The position control of the iris 22 will be described specifically. It is assumed that P denotes a value indicative of the current position of the iris 22 detected by the potentiometer 30 (current value), that PO denotes a value indicative of the target position where the iris 22 is to be set (target value), and E denotes a value of the drive signal of the motor 24 output to the amplifier 26 (equal to the drive voltage applied to the motor 24). In this case, in the CPU 20, the drive voltage E is calculated by the following proportional control expression (1) in the feedback control:

$$E = Kp \times (PO - P) \qquad\qquad (1)$$

where Kp denotes a proportional gain. Every time an iris control command is supplied from the camera body 12, the CPU 20 sets the target value PO according to the control command, and calculates the drive voltage E by the expression (1). Then, the CPU 20 supplies the drive voltage E to the motor 24. Thereby, the motor 24 rotates in a direction that makes the iris 22 approach the target position, rotates at a speed corresponding to the drive voltage E, and stops at a point of time when the iris 22 reaches the target position.

The CPU 20 of the lens device 10 updates the target value PO of the expression (1) to a value indicated by the iris control command at a timing when the iris control command is supplied, obtains the drive voltage E by the expression (1); and supplies the drive voltage E to the motor 24. Here, time intervals at which the target value PO is updated to a new value may be referred to as control intervals. In this embodiment, since the target value PO is updated at a timing when the iris control command is newly provided, the communication interval between the iris control commands coincides with the control interval. However, the current value P is successively updated based on the signal from the potentiometer 30 at time intervals which are shorter than the control intervals. and together with this update, the drive voltages E are successively calculated and supplied to the motor 24.

On the other hand, in the serial communication between the CPU 20 of the lens device 10 and the CPU 40 of the camera body 12, various signals are transmitted and received in addition to the iris control commands. For example, signals indicative of the current positions of the iris, zooming, focusing and the like are transmitted from the CPU 20 of the lens device 10 to the CPU 40 of the camera body 12, and the control commands for controlled objects other than the iris such as zooming and focusing are transmitted from the CPU 40 of the camera body 12 to the CPU 20 of the lens device 10.

Consequently, the iris control command is supplied from the CPU 40 of the camera body 12 to the CPU 20 of the lens device 10 at predetermined time intervals (communication intervals) with other types of signals being transmitted and received between supply of the iris control commands. The communication interval between the iris control commands is not specifically prescribed and varies depending on the type of the camera body 12 and circumstances.

Consequently, the control interval between the updates of the target value PO of the expression (1) varies depending on the type of the camera body 12 and the like, which leads to the case where the iris 22 does not operate smoothly.

Then, the CPU 20 detects the communication interval between the iris control commands which varies depending on the type of the camera body 12 and the like, and changes the value of the proportional gain Kp of the expression (1) according to the communication interval.

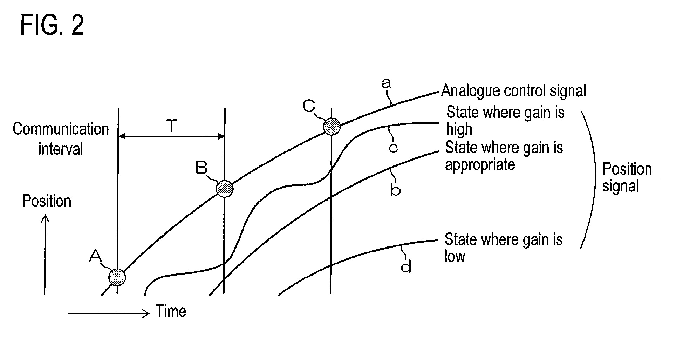

Fig. 2 is a view showing a relationship between the communication interval between the iris control commands and the position change of the iris 22 controlled based on the drive voltage E, which is obtained by the expression (1), with respect to different proportional gains Kp.

It is assumed that as shown in the figure, target values A, B, C, ... are given at predetermined communication intervals T based on the iris control commands, that the target value PO of the expression (1) is successively updated according to the iris control commands, and the drive voltage E is obtained and output to the motor 24. It is also assumed that the target values A, B, C, ..., which are given based on the iris control commands, are values along a curve "a" for the case where the iris 22 is controlled based on an analog control signal (analog signal indicative of the target value).

At this time, if the value of the proportional gain Kp is appropriate, the position of the iris 22 changes while drawing a smooth locus like a curve "b".

On the other hand, if the proportional gain Kp is too high, as shown by a curve "c", the iris 22 reaches the target position and is substantially stopped before the target value PO is updated to a next value, so that the iris 22 operates intermittently.

Conversely, if the proportional gain Kp is too low, as shown by a curve d, the target value PO is updated to a next value before the iris 22 reaches a currently set target position, so that the iris 22 operates with poor followability with respect to the change of the target position which is given by the iris control command.

Therefore, the CPU 20 changes the proportional gain Kp to an appropriate value according to the communication interval between the iris control commands so that the iris 22 smoothly operates irrespective of the communication interval.

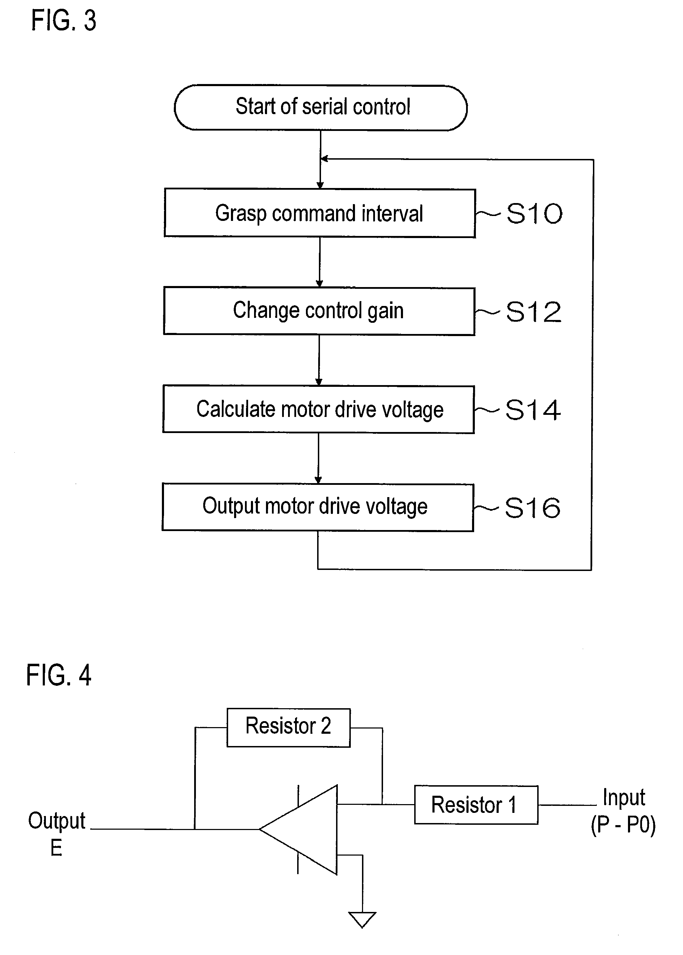

Fig. 3 is a flowchart showing a processing procedure of the iris control performed by the CPU 20.

When serial communication with the CPU 40 of the camera body 12 is started, at first, the CPU 20 of the lens device 10 grasps the communication interval between the iris control commands (step S10). Then, the CPU 20 sets the proportional gain Kp of the expression (1) to an appropriate value based on the communication interval between the iris control commands (step S12). Then, the CPU 20 calculates the drive voltage E by the expression (1) (step S14), and outputs the calculated drive voltage E to the motor 24 (step S 16).

While the iris control in the lens device 10 has been described in the above-described embodiment, other controlled object such as zooming (zoom lens) and focusing (focus lens) of the optical system other than the iris 22 shown in Fig. 1 are controlled by the configuration of a control system and processing which are similar to those of the iris 22. Therefore, when the feedback control of the position of a controlled object other than the iris 22 is performed by the expression (1) according to a control command which is supplied from the camera body 12 by serial communication, the controlled object can operate smoothly by changing the proportional gain Kp to an appropriate value according to the communication interval between the control commands for the controlled object as in the above-described embodiment.

The lens device 10 can perform both serial communication and parallel communication with the camera body 12 as in Fig. 1. However, there may be a case where the camera body 12 supplies the control command for a predetermined controlled object not by serial communication but by parallel communication. Therefore, the lens device 10 may possess a value of the proportional gain Kp for parallel communication aside from those for serial communication, and change it according to the communication interval between the control commands as described above only in the case of serial communication.

The change of the proportional gain Kp may be made by changing a variable on software (in the processing in the CPU 20) or may be made on a circuit. For example, if a value (voltage) -(PO - P) which is obtained from the target value PO and the current value P shown in the expression (1) is input to an input of an inverting amplifier as shown in Fig. 4, and an output of the inverting amplifier is applied to the motor 24 as the drive voltage E, the drive voltage E is

$$E = \frac{R2}{R1} \times (PO - P)$$

where R1 and R2 denote resistance values of a resistor R1 and a resistor R2, respectively. Comparing this expression with the expression (1), R2/R1 represents the proportional gain Kp. Therefore, by changing the resistance value of at least one of the resistors 1 and 2 by an electric signal (signal from the CPU 20), the proportional gain Kp can be changed on a circuit.

While the drive voltage E is obtained by the expression (1) in the proportional control in the above-described embodiment, it may be obtained by the following expression (2) in a PID control where an integral control and a derivative control are added to the proportional control:

$$E = Kp \times (PO - P) + Ki \times \int (PO - P)dt + Kd \times \frac{d(PO - P)}{dt} \qquad (2)$$

where Ki denotes an integral gain, and Kd denotes a derivative gain. The drive voltage E may also be obtained by a PI control expression or a PD control expression where only one of the second term on the right side and the third term on the right side of the expression (2) is added to the first term on the right side. In such a case, the values of the integral gain Ki and/or the derivative gain Kd may also be changed to appropriate values as well as the proportional gain Kp so that the controlled object smoothly operates according to the communication interval between the control commands for the controlled object.

The values of the proportional gain Kp, the integral gain Ki, the derivative gain Kd and the like are changed according to the communication interval between the control commands so that the controlled object operates smoothly as described above. However, the invention is not limited thereto. Any configuration may be adopted so long as some control parameter related to the control of the controlled object is changed according to the communication interval between the control commands so that the controlled object operates smoothly.

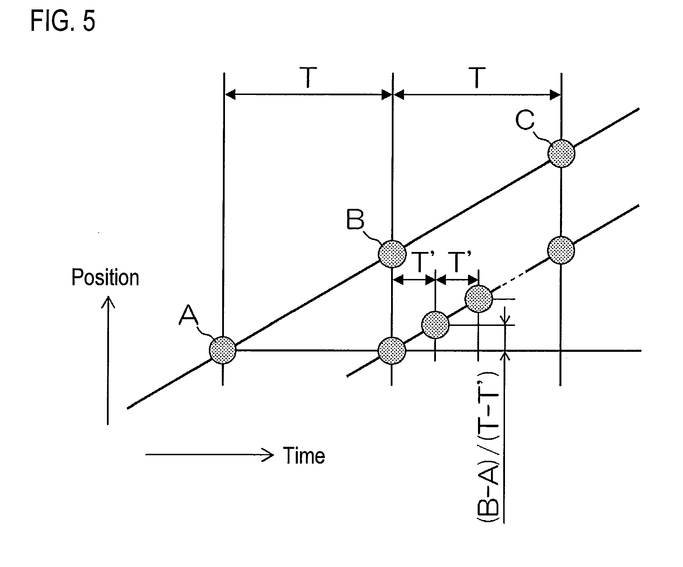

For example, a method is considered in which a timing (control interval) at which the target value PO is updated is changed in an expression to obtain the drive voltage E such as the expression (1) or (2). It is assumed that the control command (target values A, B, C, ...) is provided at the communication intervals T as shown in Fig. 5. It is also assumed that at this time, the controlled object operates intermittently since the communication interval T is too long. In this case, it is considered to make an interval (control interval T') between updates of the target value PO shorter than the communication interval T between the control commands and to update the target value PO step by step to a new target value given by the control command. For example, when the target value B is given by the control command as shown in the figure, thereafter, the value to be set as the target value PO is changed from the previous target value A to the new target value B by a value of $\dfrac{(B-A)}{T/T'}$ at control intervals T' until the time of the control interval T elapses. As described above, the controlled object can operate smoothly by changing the control interval T' according to the communication interval T between the control commands, and any other method may be used so long as the controlled object operates smoothly by changing the control parameter related to the control of the controlled object according to the communication interval between the control commands.

Also, in the above-described embodiment, a table in which communication intervals between control commands and values of control parameters optimum therefor are associated with each other may be previously created and stored in a memory, and the optimum control parameter for the communication interval may be set using this table. Alternatively, the optimum control parameter may be obtained by a predetermined relational expression.

Moreover, in the above-described embodiment, the control parameter may be changed only in the initial stage of the communication connection. Also, the communication interval between the control commands may be monitored (detected) all the time so that the control parameter is changed when the communication interval is changed. Also, the control parameter may be changed at regular intervals. Also, a command for grasping the communication interval between the control commands may be prepared on the protocol so that the control parameter is changed after reception of the command is completed. Further, a function of being capable of grasping the communication interval between the control commands by a parallel communication may be separately provided, and the communication interval between the control commands may be determined by the signal to change the control parameter. Moreover, modification may be made so that the control parameter can be changed from an outside by a switch or the like (a value of a variable or an EEPROM is changed).

Moreover, when both serial communication and parallel communication can be performed between the lens device 10 and the camera body 12 and when control is performed by a control command of serial communication while a similar control command is transmitted from the camera body 12 by parallel communication, the control parameter may be changed according to a change amount of the control command of parallel communication and a relationship between the control command of the serial communication and the current position irrespective of the communication interval between the control commands of serial communication.

The case where the control command is supplied by serial communication between the lens device 10 and the camera body 12 has been described in the above embodiment. However, there is a case where the lens device 10 is also connectable to a PC (personal computer) and a lens accessory (a zoom demand or a focus demand controller) and a predetermined controlled object can be controlled according to a control command supplied from these external devices by serial communication. In such a case, the control parameter related to the control of the controlled object is changed to an appropriate value according to the communication interval between the control commands supplied from a given external device as in the case where the control command is supplied from the camera body 12.

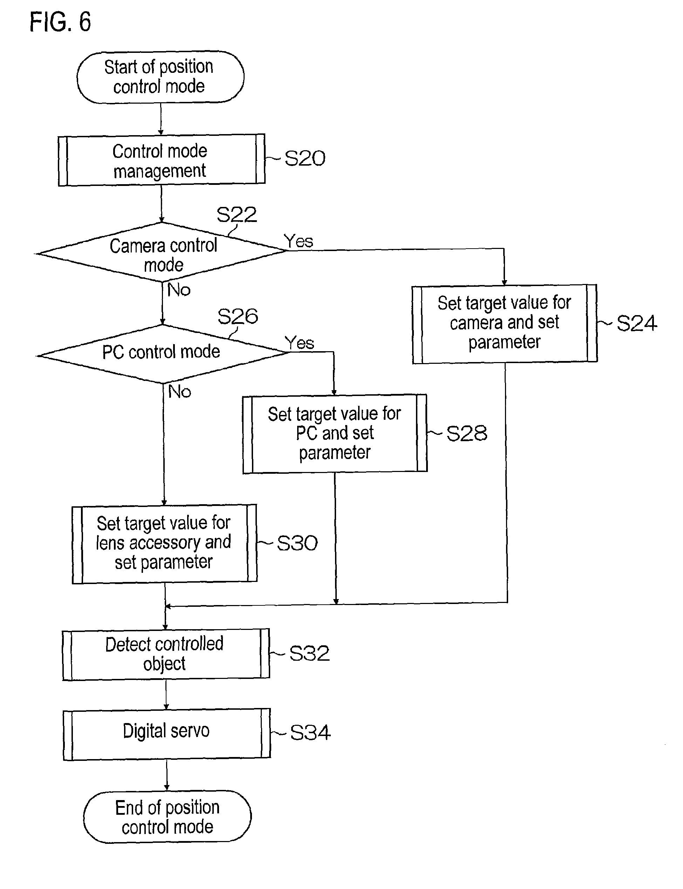

Fig. 6 is a flowchart showing a processing procedure performed by the CPU 20 of the lens device 10 when the lens device 10 is connectable to a camera body, a PC or a lens accessory, and a position of a predetermined controlled object is controlled by a control command supplied from any of the external devices.

First, the CPU 20 performs processing of control mode management, and determines which of the following modes is a current mode: (i) a camera control mode in which a position control is performed for a predetermined controlled object based on a control command supplied from a camera body; (ii) a PC control mode in which the position control is performed based on a control command supplied from a PC; and (iii) a lens accessory control mode in which the position control is performed based on a control command supplied from a lens accessory (step S20). The position control of the controlled object is a position control using a feedback control expression as shown by the expression (1) or (2).

Then, the CPU 20 determines as to whether or not the current mode is the camera mode, by the above-described processing of step S20 (step S22). If the determination result is YES, the CPU 20 sets a target value based on the control command supplied from the camera body, and sets an optimum control parameter based on the communication interval between the control commands (step S24).

If the determination result is NO at step S22, the CPU 20 determines as to whether or not the current mode is the PC control mode (step S26). If the determination is YES, the CPU 20 sets the target value based on the control command from the PC, and sets an optimum control parameter based on the communication interval between the control commands (step S28).

If the determination result is NO at step S26, the CPU 20 determines that the current mode is the lens accessory control mode, sets the target value based on the control command from the lens accessory, and sets an optimum control parameter based on the communication interval between the control commands (step S30).

When the processing of step S24, S28 or S30 is performed, the CPU 20 detects a current position of the controlled object (step S32), and performs servo control of the controlled object by a feedback control expression like the expression (1) or (2) (step S34).

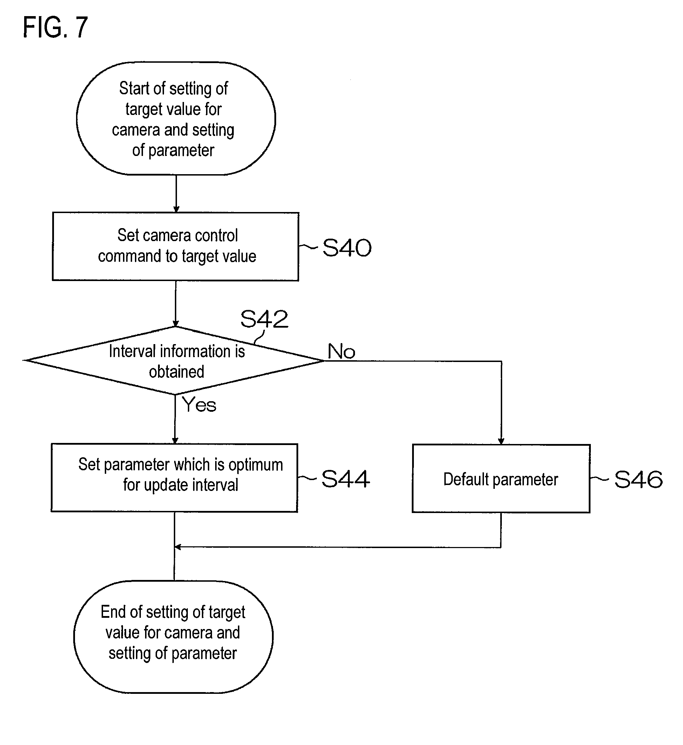

Fig. 7 is a flowchart showing details of the processing at step S24. First, the CPU 20 sets the target value according to the control command supplied from the camera body (S40). Then, the CPU 20 determines as to whether or not information about the communication interval between the control commands has already been obtained (step S42). If the determination result is YES, the CPU 20 sets the control parameter to an optimum value according to the communication interval (step S44). If the determination result is NO, the CPU 20 sets the control parameter to a default value (step S46). The processings of steps S28 and S30 are performed similarly to those of the flowchart of Fig. 7.

**Claims**

1. A lens device comprising:

   an optical system that forms a subject image, wherein the lens device is supplied with control commands related to control of a predetermined controlled object of the optical system from an external device by serial communication and controls the controlled object according to the control command;
   a communication interval detecting unit that detects a communication interval between the control commands; and
   a control parameter changing unit that changes a value of a predetermined control parameter related to the controlled object according to the communication interval detected by the communication interval detecting unit.

2. The lens device according to claim 1, wherein the control parameter changed by the control parameter changing unit is a proportional gain for proportionally controlling the controlled object.

3. The lens device according to claim 1, wherein
   data indicating a value of the control parameter which is optimum for the communication interval between the control commands is stored in a memory in advance, and
   the control parameter changing unit changes the value of the control parameter based on the data stored in the memory.

4. The lens device according to any one of claim 1 to 3, wherein the controlled object is an iris, zooming or focusing.

5. The lens device according to any one of claims 1 to 4, wherein the external device is a camera body, a personal computer or a lens accessory.

EP 2 216 986 A1

FIG. 1

FIG. 2

FIG. 3

```
           ┌──────────────────────────────┐
           │    Start of serial control   │
           └──────────────────────────────┘
                          │
                          ▼ ◄────────────────────┐
           ┌──────────────────────────────┐      │
           │    Grasp command interval    │~ S10 │
           └──────────────────────────────┘      │
                          │                       │
                          ▼                       │
           ┌──────────────────────────────┐      │
           │     Change control gain      │~ S12 │
           └──────────────────────────────┘      │
                          │                       │
                          ▼                       │
           ┌──────────────────────────────┐      │
           │  Calculate motor drive voltage│~ S14│
           └──────────────────────────────┘      │
                          │                       │
                          ▼                       │
           ┌──────────────────────────────┐      │
           │   Output motor drive voltage │~ S16 │
           └──────────────────────────────┘      │
                          │                       │
                          └───────────────────────┘
```

FIG. 4

**FIG. 5**

# FIG. 6

```
        ┌─────────────────┐
        │ Start of position │
        │  control mode    │
        └─────────────────┘
                 │
                 ▼
        ┌─────────────────┐
        │  Control mode   │ ~S20
        │  management     │
        └─────────────────┘
                 │
                 ▼  S22
              ╱───────╲          Yes
         ╱─ Camera control ─╲──────────────────┐
          ╲     mode      ╱                     │
              ╲───────╱                         │
                 │ No                           ▼
                 ▼  S26                 ┌─────────────────┐
              ╱───────╲                 │ Set target value for│
         ╱─  PC control  ─╲   Yes       │  camera and set  │ ~S24
          ╲    mode     ╱ ────┐         │   parameter     │
              ╲───────╱       │         └─────────────────┘
                 │ No         │
                 │            ▼
                 │    ┌─────────────────┐
                 │    │ Set target value for│
                 │    │   PC and set    │ ~S28
                 │    │   parameter     │
                 ▼    └─────────────────┘
        ┌─────────────────┐
        │ Set target value for│
        │ lens accessory and │ ~S30
        │  set parameter   │
        └─────────────────┘
                 │
                 ▼
        ┌─────────────────┐
        │ Detect controlled │ ~S32
        │    object       │
        └─────────────────┘
                 │
                 ▼
        ┌─────────────────┐
        │  Digital servo  │ ~S34
        └─────────────────┘
                 │
                 ▼
        ┌─────────────────┐
        │ End of position  │
        │  control mode    │
        └─────────────────┘
```

# FIG. 7

```
┌─────────────────────┐
│  Start of setting of │
│   target value for   │
│ camera and setting   │
│   of parameter       │
└─────────────────────┘
           │
           ▼
┌─────────────────────┐
│   Set camera control │   ~ S40
│ command to target    │
│       value          │
└─────────────────────┘
           │
           ▼
        S42
    ◇─────────────────◇
   ╱ Interval information ╲ ───── No ──────┐
   ╲    is obtained      ╱                 │
    ◇─────────────────◇                   │
           │ Yes                           │
           ▼                               ▼
┌─────────────────────┐        ┌─────────────────────┐
│ Set parameter which  │  ~ S44 │  Default parameter   │ ~ S46
│ is optimum for       │        │                      │
│ update interval      │        └─────────────────────┘
└─────────────────────┘                   │
           │                              │
           │◄─────────────────────────────┘
           ▼
┌─────────────────────┐
│  End of setting of   │
│  target value for    │
│ camera and           │
│ setting of parameter │
└─────────────────────┘
```

Europäisches Patentamt

European Patent Office

Office européen des brevets

# EUROPEAN SEARCH REPORT

Application Number

EP 09 18 0295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 679 918 A1 (CANON KK [JP]) 2 November 1995 (1995-11-02) * column 3 - column 4 * * column 8 - column 9 * * column 18 - column 20 * * column 25 - column 26; figures 3,5,6,16,22,23 * | 1-5 | INV. H04N5/232 H04N5/225 G03B7/20 G03B17/14 |
| X | US 5 036 399 A (MABUCHI TOSHIAKI [JP]) 30 July 1991 (1991-07-30) * column 6, line 55 - column 7, line 15; figures 1,3,4 * | 1,2,4,5 | |
| X | EP 0 511 575 A2 (CANON KK [JP]) 4 November 1992 (1992-11-04) * abstract; figures 1,3 * * column 1 - column 2 * * column 4 - column 8 * * column 11 * | 1,2,4,5 | |
| A | US 5 053 798 A (OHARA TSUNEMASA [JP] ET AL) 1 October 1991 (1991-10-01) * column 1 - column 8; figures 1a-1c,3,4,6a-7 * * column 10 * | 1-5 | TECHNICAL FIELDS SEARCHED (IPC) H04N G03B |
| A | US 2001/038418 A1 (SUDA HIROFUMI [JP] ET AL) 8 November 2001 (2001-11-08) * paragraphs [0182] - [0194]; figures 1,5,10A, 10B, 12, 13, 15 * | 1,3 | |

The present search report has been drawn up for all claims

| Place of search | Date of completion of the search | Examiner |
|---|---|---|
| Munich | 23 April 2010 | Oelsner, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 09 18 0295

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2010

| Patent document cited in search report | | Publication date | Patent family member(s) | | Publication date |
|---|---|---|---|---|---|
| EP 0679918 | A1 | 02-11-1995 | NONE | | |
| US 5036399 | A | 30-07-1991 | JP | 2065480 A | 06-03-1990 |
| | | | JP | 2791044 B2 | 27-08-1998 |
| EP 0511575 | A2 | 04-11-1992 | DE | 69228448 D1 | 01-04-1999 |
| | | | DE | 69228448 T2 | 05-08-1999 |
| US 5053798 | A | 01-10-1991 | JP | 2749806 B2 | 13-05-1998 |
| | | | JP | 63174019 A | 18-07-1988 |
| US 2001038418 | A1 | 08-11-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2756339 B
- US 5161026 A
- US 5485208 A
- US 6608651 A